# EUROPEAN PATENT APPLICATION

(11) **EP 2 586 555 A1**
(43) Date of publication of application: **01.05.2013**
(21) Application number: 11186938.4
(22) Date of filing: 27.10.2011
(51) Int. Cl.: B23D 57/00, B28D 5/04

(54) **Modular wafering concept for wafering plant**

(71) Applicant: Applied Materials Switzerland Sàrl, 1033 Cheseaux-sur-Lausanne (CH)
(72) Inventor: Nasch, Philippe, 1052 Le Mont-sur-Lausanne (CH); Von Wartburg, Gregory, 1004 Lausanne (CH)
(74) Representative: Zimmermann & Partner

(57) **Abstract**

A wire saw device (100) for sawing a plurality of slices of a workpiece (10) is described. The wire saw device includes a wire guide assembly with at least two wire guide cylinders (122) for guiding a wire (20) to form at least one wire web with at least one working area, wherein the at least two wire guide cylinders (122) have a rotation axis, a first compartment (102), which houses the wire guide assembly and has a first side portion of the compartment, which is essentially parallel to the rotation axis, wherein the first compartment further comprises a second side portion of the compartment, which opposes the first side portion and which is essentially parallel to the rotation axis, a second compartment (104) housing a spool (116) for providing new wire, wherein the second compartment (104) is adjacent the first side portion.

## Description

### TECHNICAL FIELD OF THE INVENTION

Embodiments of the present invention relate to a wire saw device, a wire saw cluster, a plant having two or more wire saw clusters, and a method for operating a wire saw device and/or cluster. More particularly, they relate to a wire saw device with improved wire management characteristics and up-scaling characteristics, and a wire saw cluster for cutting or sawing hard materials such as blocks of silicon or quartz, e.g., for cutting silicon wafers, for a squarer, for a cropper, or the like.

### BACKGROUND OF THE INVENTION

Wire saw devices exist for cutting blocks or bricks, thin slices, e.g., semiconductor wafers, from a piece of hard material such as silicon. In such devices, a stretched wire is fed from a spool and is both guided and tensioned by pulleys for guiding the wire in the cutting area. The wire that is used for sawing is generally provided with an abrasive material. As one option, the abrasive material can be provided as slurry. This may be done shortly before the wire touches the material to be cut. Thereby, the abrasive is carried to the cutting position by the wire for cutting the material. As another option, the abrasive can be provided on the wire with a coating. For example, diamond particles can be provided on a metal wire, e.g., with a coating, wherein the diamond particles are imbedded in the coating of the wire. Thereby, the abrasive is firmly connected with the wire.

Generally, the yield of wire saw devices is already at a sophisticated level. However, there is a desire for a further improvement, particularly in light of the desire to have a high yield at high throughput for photovoltaic (PV) applications.

Thereby, it has to be considered that the wires for sawing PV wafers or the like are tensioned and moved at very high speed. The wires are fed from and to spools over one or more pulleys providing a wire management and/or wire tensioning. The pulleys can, for example, re-direct the wire. However, re-directing the wire can also result in twisting of the wire. Further, an increased number of pulleys can result in a higher likelihood of wire breakage, e.g. during emergency stop where the inertia of the pulleys might hinder immediate stopping of the pulleys.

Wafering PV capacity requirements for gigawatt-plants along with a continuous desire to reduce the value $/Watt for PV modules desires increased manufacturing capacities. In the past plants for manufacturing a larger number of wafers have been realized by providing a plurality of wire saw devices for wafering PV wafers. However, unless an increase of yield from one wire saw device is achieved by process improvements or by improvements of the wire saw devices, this strategy does not result in a sufficient improvement.

A multi-wire slurry saw is nowadays the standard and most productive tool for wafer manufacturing for PV applications. It is commonly designed as stand-alone tools. The tool has five main functional groups: slicing head, slurry management, wire management, cooling group and electrical cabinet/control unit. A change in paradigm is needed in order to achieve the desired yield at high throughput of plants for manufacturing PV wafers.

### SUMMARY OF THE INVENTION

In light of the above, wire saw device for sawing a plurality of slices of a hard material according to independent claim 1, a saw cluster for sawing a plurality of slices of a hard material according to claim 8, a sawing plant for sawing a plurality of slices of a hard material according to claim 12 and method of operating a wire saw cluster having at least two wire saw devices and at least two maintenance positions according to independent claim 13 are provided. Further aspects, advantages, and features of the present invention are apparent from the dependent claims, the description, and the accompanying drawings.

According to one embodiment, a wire saw device for sawing a plurality of slices of a workpiece is provided. The wire saw device includes a wire guide assembly with at least two wire guide cylinders for guiding a wire to form at least one wire web with at least one working area, wherein the at least two wire guide cylinders have each a rotation axis, a first compartment housing the wire guide assembly, a second compartment housing a spool for providing new wire, wherein the second compartment is located adjacent to a first side of the first compartment, and a third compartment housing a further spool for taking up used wire, wherein the third compartment is located adjacent to a second side of the first compartment, wherein the second side is essentially opposing the first side.

According to another embodiment, a wire saw device for sawing a plurality of slices of a workpiece is provided. The wire saw device includes a wire guide assembly with at least two wire guide cylinders for guiding a wire to form at least one wire web with at least one working area, wherein the at least two wire guide cylinders have a rotation axis, a first compartment, which houses the wire guide assembly and has a first side portion of the compartment, which is essentially parallel to the rotation axis, wherein the first compartment further comprises a second side portion of the compartment, which opposes the first side portion and which is essentially parallel to the rotation axis, a second compartment housing a spool for providing new wire, wherein the second compartment is adjacent the first side portion, and a third compartment, which is separated from the second compartment, and which houses a further spool for taking up used wire, wherein the third compartment is adjacent the second side portion.

According to another embodiment, a wire saw device for sawing a plurality of slices of a workpiece is provided. The wire saw device includes a wire guide assembly with at least two wire guide cylinders for guiding a wire to form at least one wire web with at least one working area, wherein the at least two wire guide cylinders have a rotation axis, a first compartment, which houses the wire guide assembly and has a first side portion of the compartment, which is essentially parallel to the rotation axis, wherein the first compartment further comprises a second side portion of the compartment, which opposes the first side portion and which is essentially parallel to the rotation axis, a second compartment housing a spool for providing new wire, wherein the second compartment is adjacent the first side portion, wherein at least one of the spool and the further spool have a spool rotation axis that is essentially parallel to the rotation axis of the at least two wire guide cylinders.

According to another embodiment, a wire saw cluster for sawing a plurality of slices of a workpiece is provided. The wire saw cluster a first wire saw device and at least a second wire saw device. The first wire saw device and the at least second wire saw device each include a wire guide assembly with at least two wire guide cylinders for guiding a wire to form at least one wire web with at least one working area, wherein the at least two wire guide cylinders have a rotation axis, a first compartment, which houses the wire guide assembly and has a first side portion of the compartment, which is essentially parallel to the rotation axis, wherein the first compartment further comprises a second side portion of the compartment, which opposes the first side portion and which is essentially parallel to the rotation axis, a second compartment housing a spool for providing new wire, wherein the second compartment is adjacent the first side portion, wherein at least one of the spool and the further spool have a spool rotation axis that is essentially parallel to the rotation axis of the at least two wire guide cylinders.

According to a further embodiment, wire saw plant is provided. The wire saw plant includes a first level of the plant, a second level of the plant, which is provided above the first level of the plant, and a third level of the plant, which is provided above the second level of the plant, and at least one wire saw cluster according to any of claims 8 to 11, wherein the at least one wire saw cluster is provided on the second level or third level of the plant, typically on the second level of the plant.

According to a further embodiment, method of operating a wire saw cluster having at least two wire saw devices and at least two maintenance positions is provided. The method includes loading new wire from a first maintenance position of the at least two maintenance positions in a first wire saw device of the at least two wire saw devices, and loading new wire from the first maintenance position of the at least two maintenance positions in the second wire saw device of the at least two wire saw devices.

Embodiments are also directed at apparatuses for carrying out the disclosed methods and include apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

### BRIEF DESCRIPTION OF THE DRAWINGS

So that the manner in which the above recited features of the present invention can be understood in detail, a more particular description of the invention, briefly summarized above, may be had by reference to embodiments. The accompanying drawings relate to embodiments of the invention and are described in the following:
- Figs. 1A and 1B: show a top view and a side view of wire saw devices illustrating embodiments described herein with a rearrangement of functional groups;
- Figs. 2A and 2B: show a top view and a side view of wire saw devices illustrating embodiments described herein and having wire tracking and wire tensioning assemblies included;
- Fig. 3: shows a yet further wire saw device illustrating embodiments described herein and having another re-arrangement of functional groups;
- Fig. 4: shows a portion of another wire saw device illustrating embodiments described herein and having a further wire management unit;
- Fig. 5: shows a wire saw device cluster illustrating embodiments described herein;
- Fig. 6: shows a view of a wafering plant described according to embodiments described herein;
- Fig. 7: shows portions of a wire saw device or a wire saw cluster according to embodiments described herein and illustrating a slurry distribution system; and
- Fig. 8: shows a flow chart illustrating methods of operating a wire saw cluster according to embodiments described herein.

### DETAILED DESCRIPTION OF EMBODIMENTS

Reference will now be made in detail to the various embodiments of the invention, one or more examples of which are illustrated in the figures. Within the following description of the drawings, the same reference numbers refer to same components. Generally, only the differences with respect to individual embodiments are described. Each example is provided by way of explanation of the invention and is not meant as a limitation of the invention. Further, features illustrated or described as part of one embodiment can be used on or in conjunction with other embodiments to yield yet a further embodiment. It is intended that the description includes such modifications and variations.

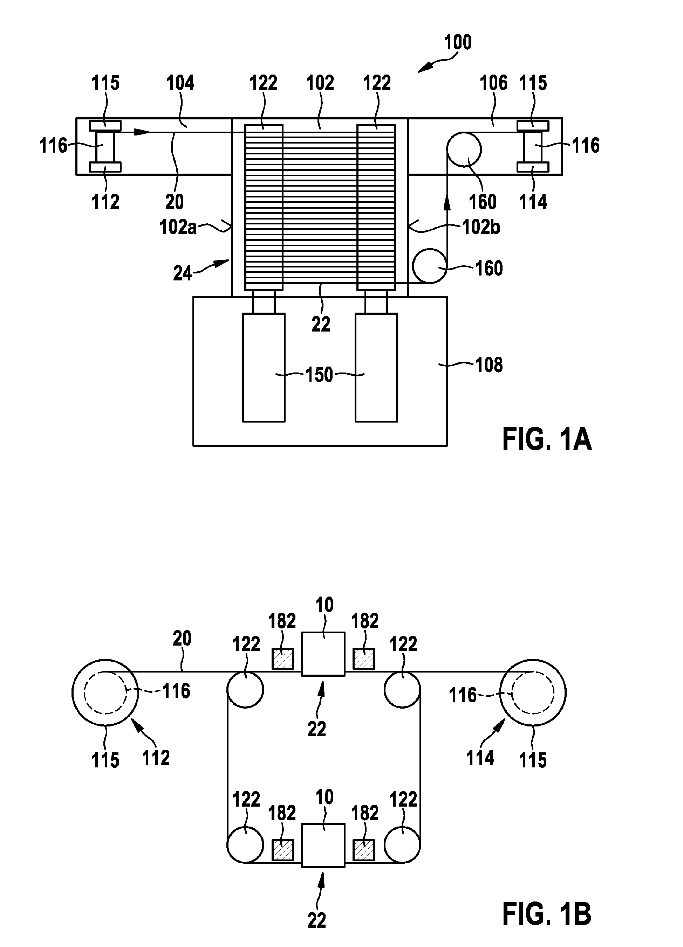

FIGS. 1A and 1B show a top view and a side view of a wire saw device 100. The wire saw device 100 includes compartments for different functional groups. The compartments provided as part of embodiments described herein are shown in figure 1A only. The wire saw device 100 includes a first compartment 102 for housing the wire guide assembly. The wire guide assembly includes at least two wire guide cylinders. Typically, as shown in figure 1B, the wire guide assembly can include four wire guide cylinders 122. The wire guide cylinders 122 form the wire web 24 such that one or more working areas 22 are provided. The workpieces 10 are sliced into wafers in the working areas 22. As illustrated in figure 1A, the wire 20 is provided into the compartment 102 from the second compartment 104. The second compartment 104 houses a spool 112 for providing new wire towards the working area 22.

The wire guide cylinders 122 which form the wire web 24 are driven by motors 150, which are provided in a yet further compartment 108. Thereby, the wire guide cylinders rotate around their respective rotation axis. According to typical embodiments, the wire guide cylinders are grooved such that the wire enters the wire guide assembly at first groove and in a first direction. The wire is subsequently guided from one groove of the wire guide cylinders to the next groove such that the wire web is formed by a plurality of essentially parallel wires. Thereby, the workpiece 10 can be sliced into wafers.

According to embodiments described herein, the compartment 102 has a side or has a side portion 102A, which is essentially parallel to the rotation axis of the wire guide cylinder 122. The second compartment 104, from which the new wire is guided into the first compartment 102, is provided at the side 102a or adjacent to the first compartment neighboring the side portion 102a. Typically, for a rectangular compartment, one side can be essentially parallel to the rotation axis of the wire guide cylinder. For other shapes of compartments 102, there can be at least a portion of the compartment 102, wherein the side 102A of the compartment is parallel to the rotation axis.

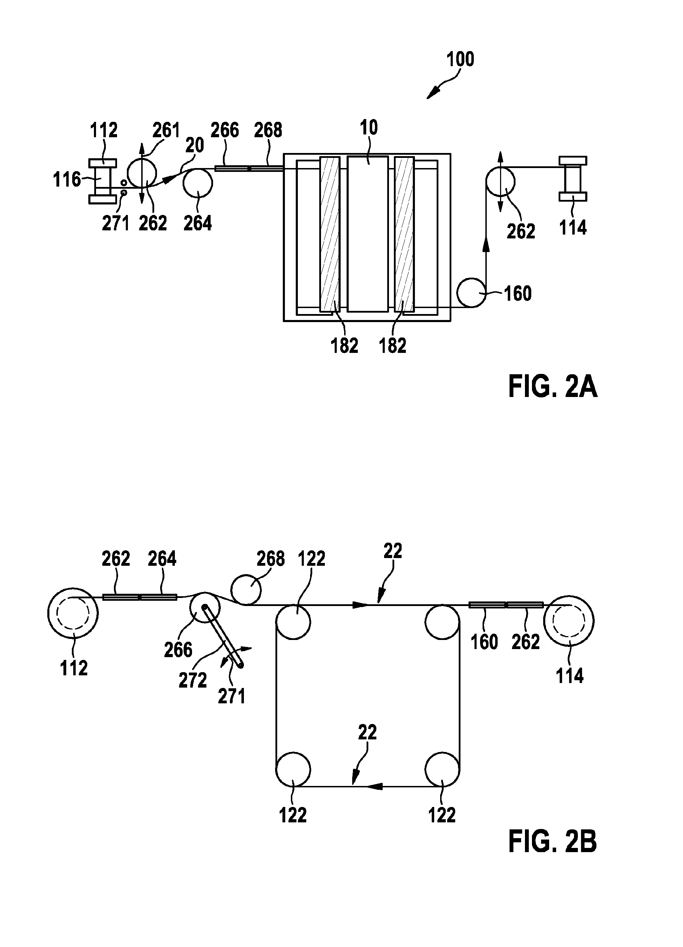

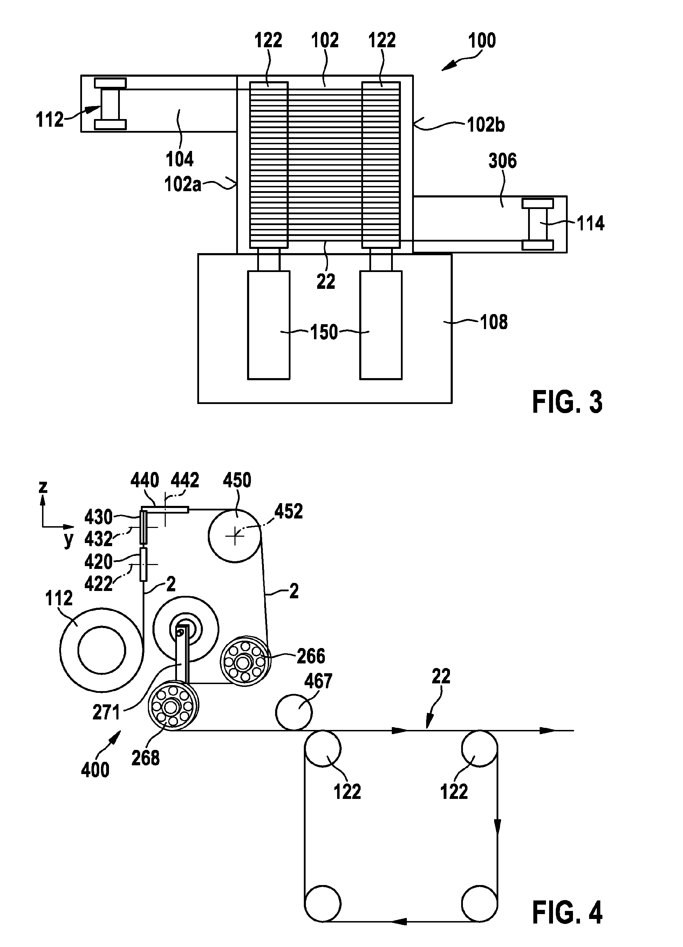

As described herein, the rotation axis of the spool 112 is also essentially parallel to the rotation axis of the wire guide cylinders 122. Thereby, the functional groups are rearranged such that the wire 20 can be guided towards the working area as directly as possible. Thereby, some deviations of the straight wire path with respect to wire tensioning, wire tracking, or other wire management units, e.g. for reduction of vibrations, can be utilized. This can be better understood with respect to figures 2A, to be in figure 4.

According to yet further embodiments, which can be combined with other embodiments described herein, the re-arrangement of functional groups can additionally or alternatively be described by the fact that the distance of the axis of the spool or the axes of the spools to the axis of the next wire guide cylinder , e.g., the closest of the axes of the wire guide cylinders, can be 1 time the size of the web and above, at least 2 times the size of the web, or even at least 4 times the size of the web. Thereby, typically, the size of the web can be defined as the distance along the wire between two wire guide cylinders, i.e. between two adjacent points where the wire touches the wire guide cylinders.

The wire is typically guided out of the first compartment 102 and provided over, for example pulleys 160, onto spool 114. Spool 114 is provided for taking up the used wire. According to typical embodiments, which can be combined with other embodiments described herein, the spools 112 and 114 can have a rim portion 115 and a central portion 116. Typically, the central portion 116 can be either cylindrically or conically shaped and the wire is provided from the central portion 116 or is provided onto the central portion 116. According to further embodiments, which can be combined with other embodiments described herein, the spool 114 can be provided in another, e.g. third compartment 106. The third compartment is provided adjacent a side portion 102b of the compartment 102, wherein the side portion 102b is opposing the side portion 102a. Thereby, a T-shaped or Z-shaped arrangement of the compartments 102, 104, and 106 can be provided.

According to some embodiments, which can be combined with other embodiments described herein, the wire saw device can further include one or more slurry nozzles 182. The slurry nozzles 182 provide slurry and/or cooling fluid onto the wire in the working area 22 for having the slurry and/or cooling fluid provided for cutting of the workpiece 10.

As shown in figure 1A, the first compartment 102, the second compartment 104, and the third compartment 106 are provided in a T-shaped arrangement. Alternatively, as shown in figure 3, the first compartment, the second compartment and the third compartment can be provided in Z-shaped arrangement. These arrangements form embodiments of the present invention and can be combined with other embodiments described herein. The arrangements allow for a re-arrangement of the functional groups in the wire saw device. Accordingly, the wire management for providing new or fresh wire and the wire management for spooling up used wire are rearranged as compared to the working area or the slicing head, respectively. As will be described in more detail below, this results in an improvement for a wire saw device and also provides a change in paradigm for the design of wire saw devices and the options of integrating the wire saw device in clusters and fabrication plants. Thereby, improved wire guiding characteristics, synergy effects, simplification of plant design, and improved operability can be provided.

As described herein, a wire management unit will be understood as a device handling the supply of wire to a cutting area or working area of a wire saw device, e.g. a wafering wire saw device, and from a cutting area or working area of a wire saw device. Typically, the wire saw includes at least two wire guides for transporting and guiding the wire in a wire moving direction, while the wire management unit provides control of the wire tension. Furthermore, the wire provided by the wire management unit forms a wire web in the cutting area. Often, a portion of a wire web will be considered as the web formed by a single wire management unit. According to some embodiments, more than one wire can be provided such that the entire wire web is formed by more than one portion of the wire web. It should be understood that a wire web may contain more than one working area portion, which is defined as an area in which a sawing process is performed. Thus, according to some embodiments described herein, a wire web can have multiple areas that are formed each by a wire from different wire management units. Further, the view shown in FIG. 1B illustrates an upper working area 22 and a lower working area 22. A workpiece 10 or more than one workpiece can be cut in each working area 22.

For modern wire saw devices like e.g. wafering wire saw devices, there is the desire to cut a hard material, such as semiconductor material, for example, silicon, quartz, or the like, at high speeds. The wire speed, that is, the speed of the wire moving through the wire saw device, the wire management unit and the material to be sawed, respectively, can be, for example, 10 m/s or higher. Typically, the wire speed can be in a range of 8 to 20 m/s. However, higher wire speeds of 25 m/s or 30 m/s, or even 40 m/s or higher can also be desirable and could be realized under certain conditions.

For unwinding and winding the wire at the desired wire speed, the spool rotates with a rotation speed of up to several thousand rotations per minute. For example, 1000 to 2000 rpm can be provided for unwinding and winding the wire.

During a cutting process by means of wire saw, the machine unwinds new wire 20 from the spool 112. During unwinding of the wire 20 from the spool 112, the position at which the wire leaves the wire carrying area 116 moves along the axis of the spool, i.e., moves in direction parallel to the axis. As the spool unwinds, the wire moves alternately from one side of the spool to the other (flange to flange).

As described above, for unwinding the wire at the desired wire speed, the spool rotates with a rotation speed of up to several thousand rotations per minute. For example, 1000 to 2000 rpm can be provided for unwinding the wire. Accordingly, the different positions, at which the wire 20 leaves the spool 112, also vary at considerable speed and the angle under which the wire is guided towards the cutting area varies correspondingly. The angle between the wire at the spool and following fixed wire position thus changes periodically. This variation generates vibration in the wire and variations in the contact angle with the subsequent pulley, which affects the friction. These variations are detrimental to the process as they create a high risk of wire breakage, e.g., due to a spike in tension within the wire as the wire accommodates the vibrations amplitudes and a movement up and down on e.g. a groove of a subsequent pulley. Further, this may be particularly relevant as there is a desire for thinner wire diameters and for diamond-coated wires, because in these cases the wire may also break even more easily.

To this purpose, as illustrated in FIGS. 2A and 2B, a first pulley 262 can be provided as a movable pulley that is longitudinally movable in a direction parallel to the spool axis. This movement is indicated by arrow 261 in FIG. 2A. The movable pulley can be equipped with a tracking system allowing it to follow the position of the wire moving from one side of the spool to the other, so that the wire always enters the pulley tangentially. Such a pulley is described, e.g., in the European patent application No. EP 09153051.9, which is herewith incorporated herein by reference, see in particular the description of the tracking system on Fig. 3A and Fig. 3B and the corresponding description thereof in European patent application No. EP 09153051.9. However, in view of the sometimes considerable tension of the wire, it is difficult to support the movable pulley sufficiently firmly so that the movable pulley can bear the high wire tension. If the movable pulley is not sufficiently firmly supported, unwanted deformations and vibrations of the pulley support, the movable pulley, and hence of the wire may occur. Such vibrations may, again, result in the unwanted oscillations in the wire and in some cases may result even in wire breakage. Accordingly, a wire management unit as illustrated in more detail with respect to FIG. 4 can be provided.

Within the wire saw device 100, there is a wire management unit. According to different embodiments, a wire saw device can be a cropper, a squarer, a wire saw or a multiple wire saw. However, the rearrangement of functional groups as described herein, can be particularly beneficial for wafering wire saw devices cutting bricks into a plurality of wafers.

The wire management unit of FIGS. 2A and 2B includes a spool 112 having a spool axis. The spool axis is typically essentially parallel to the rotation axis of the wire guide cylinders 122. Essentially parallel can thereby be understood such that the rotation axes can deviate by +- 5°. The spool is carried by a spool shaft. The spool shaft is rotatably mounted to a frame portion of the wire saw device. On the spool 112, fresh or new wire 20 to be provided towards the wire web is carried in a wire carrying area or central area 116 of the spool 112. The wire carrying area has a wire carrying length along the direction of the spool axis.

A first pulley 262 is shown in FIG. 2A. Here and in general, a pulley has a groove adapted for guiding the wire. Further, a pulley generally can have a wire guiding position for guiding one wire in the pulley, i.e., in the pulley groove. The first pulley 262 is adapted for receiving the wire 20 from the spool 112, in particular directly from the spool 112, and for then redirecting the wire. The first pulley is rotatably mounted to a pulley carrying unit, so that the first pulley 262 rotates around the first pulley axis. The pulley carrying unit, in turn, is connected to the wire saw device, more specifically to a frame portion of the wire saw device 100, so that the pulley carrying unit is longitudinally movable along a pulley motion track, i.e., the pulley motion track is defined as the region along which the pulley carrying unit is movable. Thereby, also a first pulley motion track for the first pulley is defined, i.e., a track along which the first pulley 262 is longitudinally movable. Further, as a general aspect, the first pulley motion track may have a length of at least 90% of the length of a wire carrying area of the spool 116. Here, the wire carrying area or central portion 116 is the lengthwise section of the spool 112 from which the wire may emerge from the spool, i.e., generally the length from flange to flange or rim portion to rim portion of the spool.

The pulley motion track of pulley 262 is essentially parallel to the spool axis of spool 112. According to embodiments which can be combined with any other embodiment described herein, other directions of movement might be superimposed to the above described movement. For example, a curved track and/or an inclined track with respect to the spool axis may be provided.

The first pulley axis 262 is oriented at an angle of essentially 90° with respect to the spool axis. Herein, the angle is defined as a spatial angle, i.e., the angle of the axes in the plane spanned by the axes (if necessary, after a parallel shift of one of the axes so that the axes cross and hence span a plane). The angle is defined as an absolute value, i.e., is always positive. According to some embodiments, a pulley moving device can be provided. The pulley moving device is indicated by an arrow 261 in FIG. 2A, and is adapted to cause the pulley carrying unit to move along the pulley motion track in a bi-directional mode. The pulley moving device is adapted to move the pulley 262. Further a wire position detection device can be provided, which may also be moved along the motion tracking order to position the pulley at the desired position over the spool 112. The pulley moving device can be, e.g., a linear actuator such as lineal motor, a pneumatic cylinder, a motor with a worm drive, a rack-pinion-gear or the like, such that the pulley moving device is capable of moving the pulley at least in a linear direction along the pulley motion track. Thereby, the pulley can be moved by moving the pulley carrying unit relative to the frame portion of the wire saw device .

According to further embodiments, which can be combined with other embodiments described herein, a wire position detection device can be provided. The wire position detection device detects the wire position along the direction of the motion path (here: along the spool axis), more particularly it detects at which wire position the wire traverses a detection region of the wire position detection device. Thereby, the position at which the wire leaves the spool 112 or the wire carrying area can be obtained (if necessary by triangulation).

The wire position detection device can be connected to the pulley moving device. Thereby, for example, a signal receiving unit, a controller, a computer for calculating the correct pulley position, or the like can be provided within the connection between the wire position detection device and the pulley moving device. In a particular embodiment, a controller is operatively connected to the wire position detection device for receiving the detected wire position. The controller determines a target position, and transmits a moving command to the first pulley moving device, such as to cause the first pulley moving device to move the first pulley to the target position. In particular, the target position may be the position which corresponds to the position at which the wire leaves the spool.

According to yet further embodiments, which can be combined with other embodiments described herein, the pulley moving device and/or the respective controllers thereof can include a teach-in capability, such that the controller learns from previous misalignment detections how the wire is provided from the spool. With the target position, the wire leaves the spool at a right angle with respect to the pulley 262. The first pulley moving device (261), the wire position detection device 271, and the first pulley position controller may be collectively referred to as a wire tracking system.

From the moving pulley the wire is guided to the second pulley 264, which provides a position such that the wire can enter the wire guide assembly, i.e. the wire guide cylinders, without further deflection in at least one direction or plane. That is, the wire maintains in at least one plane. The second pulley 264 is adapted for receiving the wire from the first pulley 262, in particular directly from the first pulley, and for redirecting the wire. The arrangement of a compartment housing spool 112, the spool and the orientation thereof can be provided to allow for reduced deflection of the wire before entering the cutting area.

After the second pulley 264 two further pulleys 266 and 268 are provided. The further pulleys can have a rotation axis as compared to the rotational axes of the pulleys 262 and/or 264, which is essentially perpendicular. The pulleys 266 and 268 as illustrated in FIGS. 2A and 2B provide a tensioning system for the wire 20. Thereby, as shown in FIG. 2B, the tension arm 272 can move as indicated by arrow 271 such that the tension of the wire can be adjusted.

As further shown in FIGS. 2A and 2B, pulleys 160 and 262 can be provided between the at least one working area 22 and the spool 114 for taking up used wire. By having a movable pulley 262 also for the used wire, improved winding up of the used wire on the spool can be provided. Even though not shown on FIGS. 2A and 2B a similar tensioning system as provided by pulleys 266 and 268 can also be provided for the used wire. This can assist in providing the desired tension of the wire in the working area and on the spool 114 and can also be used in the event of bi-directional sawing, i.e. sawing also including a wire movement in a reverse direction.

Further, as a general aspect the pulley motion track of the first pulley 262 can be arranged such that for any position at which the wire 20 exits the spool 112 or enters the spool 114, there is at least one position of the first pulley on the pulley motion track such that the wire is entering the first pulley essentially perpendicular to the pulleys axis. This arrangement allows for a twist-free wire. Herein, "twist-free" refers to the wire entering and exiting the coil and the pulleys of the wire management unit essentially tangentially.

FIG. 4 shows another wire management unit 400 according to some embodiments, which can be combined with other embodiments described herein. The embodiment of FIG. 4 includes a spool 112, mounted on a spool shaft, and the pulleys 420, 430 and 440 are arranged to guide the wire, particularly with a wire tracking system. Examples of a wire tracking system are described in European patent application No. 09153051.9, entitled "Wire saw device and method for operating same" filed February 17, 2009, which is incorporated herein by reference to the extent the applications are not inconsistent with this disclosure.

The wire is redirected by the first pulley 420, which is connected to a wire motion system or movable to track the wire position, by a first redirection angle of 90°, and by the second pulley 430 by a second redirection angle of 180°. Due to the large second redirection angle, a main portion of the wire tension, especially in the case of tension peaks, is absorbed by the second pulley which is firmly supported by a frame portion of the wire saw device 100. Due to the firm support by the frame portion, the second pulley 430 can bear the tension more easily and stably than the moveable first pulley 420. Thereby, unwanted deformations and vibrations of the movable pulley 420 and, hence, of the wire are reduced. By consequence, the oscillations of the wire itself, of components of the wire management unit, or of other components of the wire saw device can be reduced as well. Further, the risk of wire breakage is reduced. Thereby, a higher wire speed and hence a higher wire throughput can be achieved.

Generally, wire tension can be absorbed to some degree by the firmly attached second pulley 430 if the wire is redirected by the first pulley by a first redirection angle of not more than 120°, and if the wire is redirected by the second pulley by a second redirection angle of not less than 60°. In the example of Fig. 4, the redirection angles are independent of the location of the first pulley 420 on the first motion track, but more generally the above condition should be met for at least one location of the first pulley 420 on the first motion track. In some embodiments, which can be combined with any other embodiments described herein, the above condition is even met for any location of the first pulley on the first motion track. In some embodiments, the first redirection angle is 100° or less, or even 90° or less. Further, in some embodiments, the second redirection angle is not less than 90°, not less than 120°, or even 180°. Here, the redirection angle is defined as the integral of the deflection angles by which the wire is deflected. Hence, e.g., a quarter turn leads to a deflection angle of 90°, and a three quarter turn leads to a deflection angle of 270°. The deflection angle is taken as an absolute value and hence is always positive, regardless of the deflection direction.

Also, an alternative and generally useful configuration can be expressed as follows: In a configuration, the second redirection angle is larger than the first redirection angle. In this configuration, the load received by the second pulley due to wire tension of the wire may be greater than the load received by the first pulley. Again, this may help avoiding an excessive load on the moveable first pulley. A further alternative and generally useful configuration can be expressed as follows: In a configuration, the redirection angles are chosen such that the second pulley 430 receives a greater load due to wire tension of the wire 20 than the first pulley 420.

In Fig. 4, the first and second redirection angles are directed in opposite winding directions to one another. This allows for a particularly compact arrangement and also allows for a particularly efficient wire tension absorption by the second pulley. Further, the first pulley axis 422 and the second pulley axis 432 are essentially parallel to each other. More generally, in embodiments the first pulley axis 422 and the second pulley axis 432 may have an angle of less than 90° with respect to each other.

Further, the pulley motion track in Fig. 4, wherein the first pulley 420 is movable along the spool axis, is parallel to the wire section of the wire 20 between the first pulley 420 and the second pulley 430. Thereby, for any position of the first pulley 420, the wire between the first and the second pulley extends in the direction of (i.e., parallel to) the pulley motion track. This means that the orientation of the wire 20 is not influenced by the position of the first pulley 420 on the pulley motion track. Further, for any position of the first pulley, the first pulley and second pulley are arranged to each other such that the wire exits from the first pulley tangentially, and is fed to the second pulley tangentially, or twist-free.

Further, a third pulley 440 and a fourth pulley 450 are shown. The fourth pulley 450 receives the wire from the third pulley 440 and redirects the wire by a fourth redirection angle. The fourth pulley 450 is rotatably mounted to the frame for rotation around a fourth pulley axis. Here, the fourth redirection angle is about 90°. In other embodiments, the fourth redirection angle may be between 60° and 120°. The fourth pulley axis is essentially parallel to the spool axis. Further, the fourth pulley axis is essentially perpendicular to the first pulley axis, the second pulley axis, and the third pulley axis. In other embodiments, the fourth pulley axis may be essentially parallel to at least one of these axes.

The embodiment of FIG. 4 further includes a wire tensioner for controlling the tension of the wire. The wire tensioner includes a fifth pulley 266 rotatably mounted to the frame for rotation around a fifth pulley axis and a sixth pulley 268 rotatably mounted to a movable element 271 for rotation around a sixth pulley axis. The movable element 271 is movably mounted on a frame portion of the wire saw device. The movement of the movable element 271 may be controlled by a motor, or the movable element 271 may be pre-biased e.g. by a spring, for controlling the wire tension. In FIG. 4, the movable element 271 is shown as a pre-biased swivel lever. The wire tensioner receives the wire 20 from the fourth pulley 450 and provides the wire 20 to the wire web or the first working area 22 (to the right of the wire management unit shown in FIG. 4). More precisely, the fifth pulley 266 receives the wire 20 from the fourth pulley 450 and deflects the wire by a fifth deflection angle, and then the sixth pulley 268 receives the wire 20 from the sixth pulley 266 and deflects the wire by a sixth deflection angle. A seventh pulley 467 can be provided in the vicinity of the first wire guide cylinder to be contacted by the new wire in order to avoid vibrations between the wire management unit 400 and the working area 22.

Continuing the description of FIG. 4, besides the wire handling section 400, which in the following will also be called primary wire handling section 300, the wire management unit of FIG. 4 also can also have a secondary wire handling section. Here, the terms "primary" and "secondary" are introduced for ease of identification, and do not imply any hierarchical or functional order of the wire handling sections, spools etc. The secondary wire handling section can be constructed similarly to the primary wire handling section. The secondary wire handling second or wire management unit is provided between the wire guide assembly and the spool for taking up used wire.

In an example mode of operation, henceforth called primary-to-secondary-spool sawing, the primary wire handling section provides wire from the primary first spool 112 to the web, so that the wire can be used for sawing in the web. Then, the secondary wire handling section receives the wire from the web. Thereby, the wire 20 is transported from the web to the secondary wire tensioner, is transported to further pulleys and from there it is finally wound onto the spool 114 (see, e.g. FIGS. 2A and 2B).

Generally, the spools in which new wire is provided are of a different type (say, a first spool type) than the spools onto which the used wire is wound (say, a second spool type). For example, the spools in which new wire is provided may be disposable spools from a wire manufacturer. Such spools may, on the other hand, be unsuitable for receiving used wire because they sometimes do not withstand the high wire tension of the used wire. In order to support these different spool types during primary-to-secondary-spool sawing, the primary spool shaft (i.e. the spool shaft of the primary wire handling section) may be adapted for carrying a spool of the first type, and the secondary spool shaft (i.e. the spool shaft of the secondary wire handling section) is adapted for carrying a spool of the second type, i.e. the second type being different from the first type.

Also, in some embodiments, which can be combined with any other embodiments herein, the wire management section may support bidirectional sawing. Herein, bidirectional sawing is understood to be a sawing process during which first the wire is transported from the primary spool to the secondary spool, and thereafter is transported back from the secondary spool to the primary spool, and again from the primary spool to the secondary spool etc. Thus, for bidirectional sawing the (primary) spool 112 is adapted for providing wire to the wire web and is also adapted for receiving used wire from the wire web. Likewise, a secondary spool 114 may be adapted for providing wire to the wire web and is also adapted for receiving used wire from the wire web.

For the bidirectional sawing, a controller is adapted for sending actuating commands to the primary spool shaft and to the secondary spool shaft, the actuating commands causing, in a first step, the first spool shaft to unwind wire to the second spool, and causing, in a second step, the second spool shaft to unwind wire to the first spool.

The above-described wire management units are particularly useful if thin wires, e.g. with slurry, or wires with a coating, e.g. a diamond coating, are used. Accordingly, for wafering, in embodiments, which can be combined other embodiments described herein, the wire handling sections and wire saw devices described herein are adapted for thin wires having a diameter below about 200 µm, such as diameters between about 80 µm and about 150 µm Further, the wire handling sections and wire saw devices described herein are adapted for coated wires, for example a wire having a nickel coating with diamond particles embedded therein. Such wires may typically have a core diameter of below about 200 µm, such as diameters between about 80 µm and about 150 µm For thin wires a twisting of the wire might increase the risk of breaking of the wire or of damaging the coating, so that a twist-free operation is advantageous. For squaring applications, the wire diameters can be about 400 µm or below, for example, 250 µm to 350 µm.

FIG. 3 illustrates another wire saw device 100 according to embodiments described herein. The wire saw device 100 includes compartments for different functional groups. The wire saw device 100 includes a first compartment 102 for housing the wire guide assembly. The wire guide assembly includes at least two wire guide cylinders. The wire guide cylinders 122 form the wire web such that one or more working areas 22 are provided. The workpieces are sliced into wafers in the working area. As illustrated in figure 3, the wire 20 is provided into the compartment 102 from the second compartment 104. The second compartment 104 houses a spool 112 for providing new wire towards the working area 22. The wire guide cylinders 122 which form the wire web 24 are driven by motors 150, which are provided in a yet further compartment 108. Thereby, the wire guide cylinders rotate around their respective rotation axis. The second compartment 104 and the yet further compartment 108 are provided similarly to the embodiments described with respect to FIGS 1A and 1B.

According to embodiments described herein, the compartment 102 has a side or has a side portion 102A, which is essentially parallel to the rotation axis of the wire guide cylinder 122. The second compartment 104, from which the new wire is guided into the first compartment 102, is provided at the side 102a or adjacent to the first compartment neighboring the side portion 102a. Typically, for a rectangular compartment, one side can be essentially parallel to the rotation axis of the wire guide cylinder. For other shapes of compartments 102, there can be at least a portion of the compartment 102, wherein the side 102A of the compartment is parallel to the rotation axis.

As described herein, the rotation axis of the spool 112 is also essentially parallel to the rotation axis of the wire guide cylinders 122. Thereby, the functional groups are rearranged such that the wire 20 can be guided towards the working area as directly as possible.

The wire is typically guided out of the first compartment 102 into the compartment 306. The compartment 306 is arranged such that the spool 114 can take up the wire essentially from the position where the used wire leaves the last wire guide cylinder 122. Spool 114 is provided for taking up the used wire. The third compartment is provided adjacent a side portion 102b of the compartment 102, wherein the side portion 102b is opposing the side portion 102a. Thereby, in the embodiment shown in FIG. 3 Z-shaped arrangement of the compartments 102, 104, and 106 can be provided.

As shown in figures 1A and 3, the first compartment 102, the second compartment 104, and the third compartment 106 are provided in a T-shaped arrangement or in a Z-shaped arrangement. These arrangements form embodiments of the present invention and can be combined with other embodiments described herein. The arrangements allow for a re-arrangement of the functional groups in the wire saw device. Accordingly, the wire management for providing new or fresh wire and the wire management for spooling up used wire are rearranged as compared to the working area or the slicing head, respectively.

Having the compartments for providing new wire and for taking up used wire next to the opposing side portions of the compartment for the wire guide assembly providing the at least one working area, it is possible to provide a reduced number of pulleys and wire redirecting, which can result in wire twisting, can be reduced. Without wire tracking and without wire tensioning theoretically no pulleys are required. If a wire tracking and a wire tensioning is required in a wire management unit, at least three are provided according to embodiments described herein, typically four pulleys can be provided (see, e.g. FIGS. 2A and 2B). According to yet further embodiments, which can be combined with other embodiments described herein, even a more sophisticated wire management unit as shown in FIG. 4 can have only seven pulleys or even only 6 pulleys if pulley 467 shown in FIG. 4, which is provided for safety reasons only, would be removed. Accordingly, according to embodiments described herein, 7 or less pulleys (or even 6 or less pulleys) can be provided in a wire management unit wherein the functional groups are rearranged. For example, even 4 or less pulleys or 3 or less pulleys can be provided, i.e. 4 or 3 pulleys would even be sufficient to provide a tracking system and a wire tensioning.

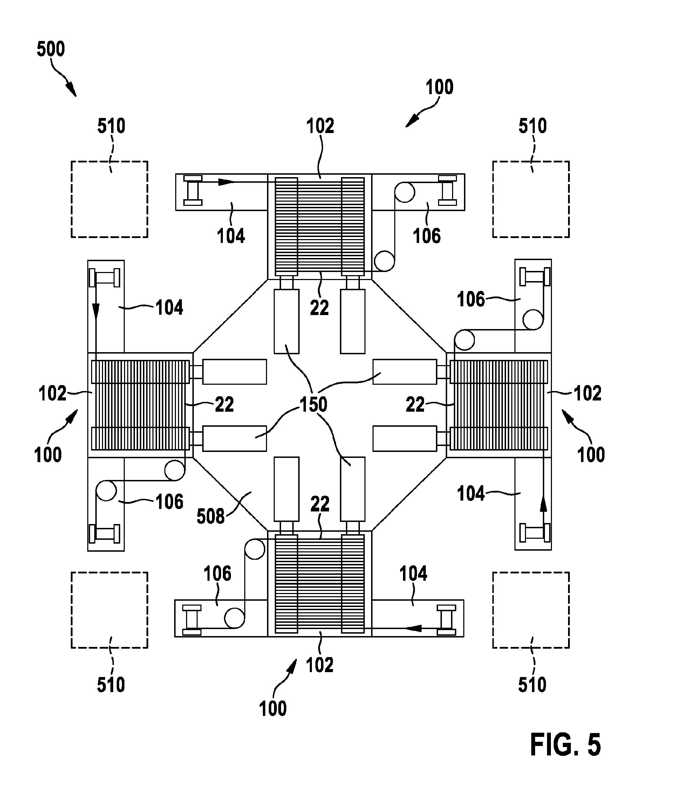

The new arrangement of functional groups according to embodiments described herein allows for improved guidance of the wire in the working area. Yet further, the new arrangement of functional groups allows for improved up-scaling characteristics of a wire saw device. Thereby, the plant for wafering for PV (photovoltaic) applications is not as simple extension of the number of tools, which would not result in a significant leap in productivity unless the individual tool will have a leap in productivity. According to yet further embodiments, which can be combined with other embodiments described herein, the design of the tool can result in an improved integration in a manufacturing plant in an integrated manner. Thereby, synergy purposes can be better considered. Figure 5 illustrates a wire saw cluster 500. For example, the wire saw cluster 500 includes for wire saws 100. Each of the wire saws 100 includes a first compartment 102 configured for housing the wire guide assembly providing the working area or working areas 22. Further, each wire saw device 100 includes the second compartment 104 configured for housing a spool with new, fresh wire and the third compartment 106 for housing the spool taking up the used wire.

In light of the re-arrangement of functional groups the motors 150 for driving the wire guide cylinders can be arranged in a common compartment 508. Further, the wire saw cluster can be re-arranged such that the second chambers 104 and third chambers 106 of neighboring wire saw devices 100 are arranged next to each other. Thereby, maintenance areas 510 are provided. These maintenance areas 510 are provided such that new wire can be provided in two of the second compartments 104 from one maintenance area 510. Further, used wire can be removed from two of the wire saw devices out of compartments 106 from one maintenance area 510.

This arrangement allows for a gigawatt integrated manufacturing plant wherein wafering and/or wafer slicing for PV applications can be a more efficiently conducted. The wire saw devices 100, which have the re-arrangement of functional groups, have improved modularity and can form wire saw clusters 500. Thereby, functional synergy effects can be achieved. According to yet further embodiments, which can be combined with other embodiments described herein, the arrangement of the cluster 500 shown in figure 5, can similarly be conducted with the Z-shaped wire saw device 100, which is shown in figure 3. Thereby, the size of compartments 106 might need to be adapted.

According to some embodiments, which can be combined with other embodiments described herein, the basic unit of the wire saw device 100 can include a double table, which is supporting one or more workpieces, with a single position for workpieces, such that the workpieces can be provided in an upper working area 22 and in a lower working area 22 (see, e.g. figure 1B). The wire guide cylinders 122 have a length in axial direction, which is sufficient such that two or three bricks can be provided next to each other in axial direction of the wire guide cylinders. For example, the length of a wire guide cylinders can be 400 mm to 800 mm and/or the usable length per position can be 450 to 650 mm. Accordingly, a cluster shown in figure 5 includes four basic units. Thereby, a yearly productivity of about 20 MW can be realized at a reduced footprint. Thereby, a yearly productivity of 5 to 6 million wafers (156 mm x 156 mm) per year can be realized at a reduced footprint.

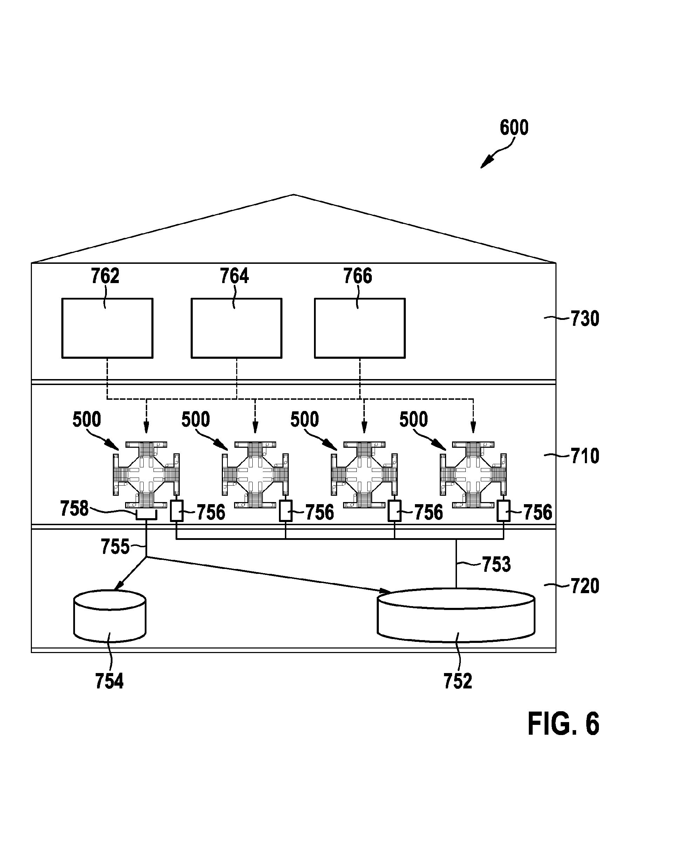

According to yet further embodiments, which can be combined with other embodiments described herein, the wire saw clusters 500 can be arranged in a manufacturing plant 600 as illustrated in figure 6. Typically, the synergetic effects can be further improved by having the wire saw clusters on one floor 710, such as a slicing floor, by having the slurry and/or cooling fluid on another floor 720, and by providing other utilities such as electrical power, control equipment, or other cooling water on a yet further floor 730. It will be understood, that this arrangement does not necessarily relate to different floors of the building, but can also relate to different planes provided within one floor of the building. Thereby, it is also possible that maintenance personal with specific skills can work on one floor and a specialization of personal on one floor can be achieved. Typically, a floor is not only to be understood as a floor of a building but can also relate to different levels.

As shown in figure 6, electrical power can be provided from a central unit 762 for providing electrical power, cooling water for motors drives, or the like can be provided from a central unit 764 for cooling water, and other supply means, such as compressed air or compressed dry air can also be provided from a central unit 766. For wafering processes using slurry, a slurry can be provided by a tank 752. The fresh slurry is provided by conduits 753 to the wire saw clusters 500. According to yet further embodiments, which can be combined with other embodiments described herein, a tank with fresh slurry can also be provided for each of the wire saw clusters 500 (not shown). According to yet further additional or alternative implementations, a quality check of the slurry can be conducted between the tank 752 and the tanks for each cluster 500 or the clusters, respectively. The quality check can for example be conducted on density, viscosity, kerf content, particle size distribution (PSD), and/or water content. The used slurry is collected by screen 758 wherein figure 6 shows only one screen. From the screen, the used slurry can be provided for a tank for used slurry 754. Additionally or alternatively, an individual tank 754 can be provided for each wire saw cluster 500. According to some embodiments, a filter can be provided for the used slurry. For example, the filter can be provided within conduits 755. The used slurry can be recycled or treated in order to be fully or partially re-used. This is indicated by a portion of the conduits 755 which is redirected to the tank 752 for fresh slurry. According to yet further embodiments, which can be combined with other embodiments described herein, the embodiments described for slurry as described above can also be provided for cooling fluid in the event diamond wire is used.

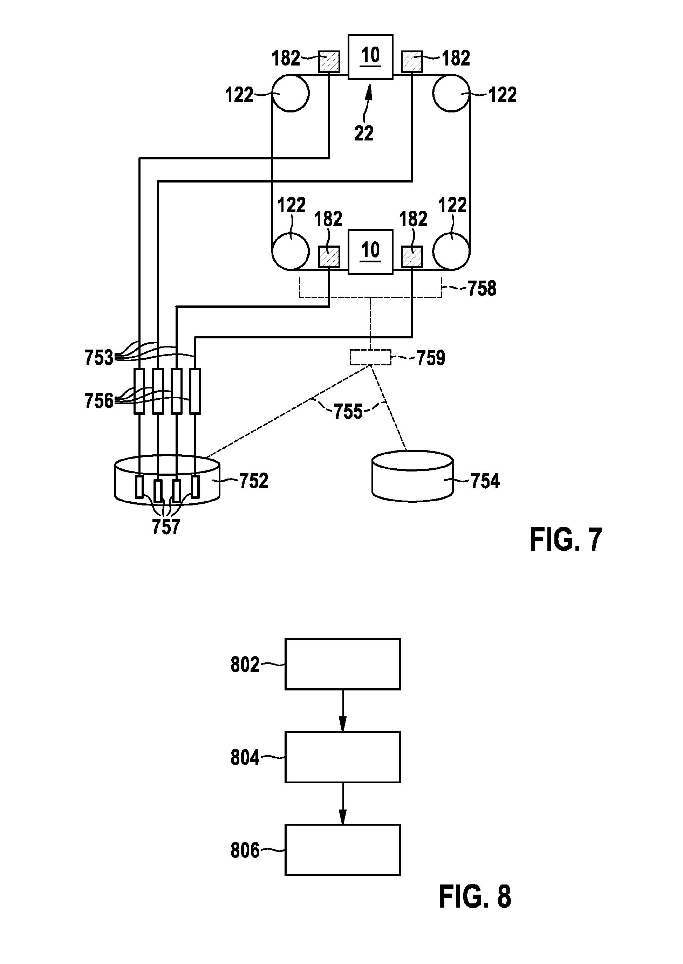

For the above-described re-arrangement of functional groups the slurry distribution can be improved as described in more detail with respect to figure 7. Figure 7 shows one cutting unit having for wire type cylinders 122, two working areas 22 and four slurry nozzles 182. However, this is for illustrative purposes only and the concept shown in figure 7 can also be applied for the wire saw cluster 500 (see, e.g., figure 5). The slurry distribution for one cluster includes a tank 752 for fresh slurry.

The slurry nozzles 182 are provided at the uppermost point in the slurry distribution system, such that the slurry is distributed under constant pressure. According to typical embodiments, each cluster can have one slurry tank 752 and, for example, one slurry tank mixer. According to some embodiments, a pump 757 can be provided for each slurry nozzle 182, such that each nozzle is individually controllable. Thereby, the flow to each nozzle is under constant pressure. As the nozzle is at the uppermost point in the distribution system, only pressure from the pumps is provided. For each slurry distribution conduits 753 a heat exchanger 756 can be provided. Thereby, quality and control of the slurry for the cutting process can be improved. The slurry is collected by screen 758 which can be provided for one, for two or more slurry nozzles 182. The slurry is filtered with slurry filter 759 and can be provided into tank 754, or partially also into tanks 752. According to a yet alternative implementation, the slurry can be provided into tanks 754 and the recycling or treatment of the used slurry can be conducted such that the used slurry can be fully or partially be reinserted into tanks 752. In the case of a wafering plant 600, the used slurry from tank 754 can also be provided in a fresh slurry tank for the entire manufacturing plant after recycling thereof.

As shown in figure 7, the distribution lines 753 for distributing the slurry from the tank 752 to the slurry nozzles 182 are provided as individual conduits for each nozzle 182. In the event there can be some compromise on quality, a few slurry nozzles 182 may also share a pump 757 and a heat exchanger 756. For example the upper two and/or the lower two slurry nozzles 182 in FIG. 7 can share one slurry distribution. Yet, according to beneficial implementations with respect to quality, each slurry nozzle 182 in a wire saw device or a wire saw cluster has the corresponding pump 757 and the corresponding heat exchanger 756 for providing the fresh slurry from the tank 752 to one slurry nozzle. Thereby the tank is typically provided for one cluster. As shown in figure 6, additionally or alternatively, a common tank can also be provided for the cutting manufacturing plant and can, for example, distribute the fresh slurry into tanks provided for each cluster or to each cluster.

Thereby, according to typical examples, the cluster shown in figure 5 can have one slurry tank, one slurry tank mixer, no return tank, constant pressure for the flow to the nozzle, a temperature control for each nozzle, no sedimentation point in light of the nozzles being at the uppermost part of the distribution system, no slurry distributor, i.e., a separate conduit for each nozzle, 16 slurry nozzles, 16 slurry pumps, for example one density and/or viscosity meter, and/or 16 heat exchange units. The cutting is conducted in four compartments with a single brick location in each working area 22 and there are four wires used, wherein wire management is separated into new wire and used wire in separate compartments. The separation of new and used wire reduces contamination of the new wire portion by the used wire portion. Further, an improved maintenance, as described above, can be provided.

This can also be understood from figure 8 illustrating a flowchart of a method of operating a wire saw cluster. In step 802, new wire is provided into a wire saw device 100 from the first maintenance position 510. In step 804, new wire is provided from the same maintenance position 510 in the second wire saw device of the wire saw cluster. And in step 806, the wire saw is operated for cutting wafers or the like.

As described above, the re-arrangement can provide one or more of the following advantages: a reduced number of pulleys and, thus, a reduction of wire twisting, a separation of wire management and spools for new (fresh) and used wire, and an improved slurry distribution system. Thereby, according to embodiments described herein, which can be combined with other embodiments described herein, particularly separate chambers or compartments can be provided for wire management and spools for new (fresh) and used wire. A loading of bricks for cutting, unloading of cut wafers, and loading and unloading of wire spools can be improved, particularly for wire saw clusters as described herein. For example, the accessibility can also be improved by common maintenance area for similar maintenance tasks and/or by a common compartment for motors, i.e. drives and/or actuators. Thereby, the clusters described herein have a reduced footprint per MW PV manufacturing, which results in improved cost of ownership. Thereby, it has to be considered that costs of ownership and, resulting there from, costs per MW photovoltaic power, are key aspects for PV manufacturing plants. Further, the vertical layout of a wafer manufacturing plant provides a further reduction of footprint and a slurry distribution based upon better controllable pressure and slurry conditions such as homogeneity.

While the foregoing is directed to embodiments of the invention, other and further embodiments of the invention may be devised without departing from the basic scope thereof, and the scope thereof is determined by the claims that follow.

## Claims

1. A wire saw device (100) for sawing a plurality of slices of a workpiece (10), comprising:
a wire guide assembly with at least two wire guide cylinders (122) for guiding a wire (20) to form at least one wire web with at least one working area (22), wherein the at least two wire guide cylinders have each a rotation axis;
a first compartment (102) housing the wire guide assembly;
a second compartment (104) housing a spool (116) for providing new wire, wherein the second compartment is located adjacent to a first side of the first compartment; and
a third compartment (106), housing a further spool (116) for taking up used wire, wherein the third compartment is located adjacent to a second side of the first compartment, wherein the second side is essentially opposing the first side.

2. The wire saw device according to claim 1, further comprising
wherein at least one of the spool (112) and the further spool have a spool rotation axis that is essentially parallel to the rotation axes of the at least two wire guide cylinders.

3. The wire saw device according to claim 2, wherein the wire guide assembly is configured for moving the wire within the at least one working area along a first direction, and wherein the wire is guided into the first compartment essentially along the first direction and the wire is guided out of the first compartment essentially along the first direction.

4. The wire saw device according to any of claims 1 to 3, wherein the wire has a wire position upon being guided into the first compartment which allows for the wire being guided onto the wire guide assembly with one deflection of wire direction or less.

5. The wire saw device according to any of claims 1 to 4, further comprises a wire management unit provided in the second compartment.

6. The wire saw device according to any of claims 1 to 5, further comprising a wire tracking system and a wire tensioning system.

7. The wire saw device according to any of claims 1 to 6, wherein three to seven pulleys (262, 264, 266, 268; 420, 430, 440, 450, 467) are provided between the spool and the wire guide assembly.

8. The wire saw device according to any of claims 1 to 7, wherein the first compartment (102) has a first side portion (102a) of the compartment, which is essentially parallel to the rotation axis and a second side portion (102b) of the compartment, which opposes the first side portion and which is essentially parallel to the rotation axis, wherein the second compartment is adjacent the first side portion and wherein the third compartment is adjacent the second side portion.

9. A wire saw cluster (500) for sawing a plurality of slices of a workpiece, comprising:
a first wire saw device (100) according to any of claims 1 to 8; and
at least a second wire saw device (100) according to any of claims 1 to 8.

10. The wire saw cluster according to claim 9, further comprising:
a drive compartment (508) for housing at least a first drive for driving the at least two wire guide cylinders of the first wire saw device, and for housing at least a second drive for driving the at least two wire guide cylinders of the at last second wire saw device.

11. The wire saw cluster according to any of claims 9 to 10, wherein the second compartment of the first wire saw device is adjacent to the second compartment of the second wire saw device.

12. The wire saw cluster according to any claims 9 to 11, wherein four wire saw devices according to any of claims 1 to 7 are provided.

13. A wire saw plant, comprising
a first level of the plant (720), a second level of the plant (710), which is provided above the first level of the plant, and a third level (730) of the plant, which is provided above the second level of the plant; and
at least one wire saw cluster (500) according to any of claims 9 to 12, wherein the at least one wire saw cluster is provided on the second level or third level of the plant, typically on the second level of the plant.

14. An method of operating a wire saw cluster (500) having at least two wire saw devices (100) and at least two maintenance positions (510), the method comprising:
loading new wire from a first maintenance position of the at least two maintenance positions in a first wire saw device of the at least two wire saw devices; and
loading new wire from the first maintenance position of the at least two maintenance positions in the second wire saw device of the at least two wire saw devices.

15. The method according to claim 14, further comprising:
maintaining wire guide assembly drives of the first wire guide device and a second wire saw device of the at least two wire saw devices from one compartment (508) of the wire saw cluster.

16. The method according to any of claims 14 to 15, further comprising:
providing slurry and/or cooling fluid from one tank to the at least two wire saw devices.
